(19) Europäisches Patentamt
European Patent Office
Office européen des brevets

(11) EP 1 591 619 A1

(12) EUROPEAN PATENT APPLICATION

(43) Date of publication:
02.11.2005 Bulletin 2005/44

(51) Int Cl.$^7$: E21B 43/25

(21) Application number: 04291110.7

(22) Date of filing: 28.04.2004

(84) Designated Contracting States:
AT BE BG CH CY CZ DE DK EE ES FI FR GB GR HU IE IT LI LU MC NL PL PT RO SE SI SK TR
Designated Extension States:
AL HR LT LV MK

(71) Applicants:
- SERVICES PETROLIERS SCHLUMBERGER
75007 Paris (FR)
Designated Contracting States:
FR
- SCHLUMBERGER TECHNOLOGY B.V.
2514 JG Den Haag (NL)
Designated Contracting States:
AT BE BG CH CY CZ DE DK EE ES FI GR HU IE IT LI LU MC PL PT RO SE SI SK TR
- SCHLUMBERGER HOLDINGS LIMITED
Road Town, Tortola (VG)
Designated Contracting States:
GB NL

(72) Inventors:
- Anxionnaz, Hervé
92260 Fontenay-aux-Roses France (FR)
- Maroy, Pierre
42330 Saint Galmier (FR)
- Montaron, Bernard
92140 Clamart (FR)

(74) Representative: Ménès, Catherine et al
Etudes et Productions Schlumberger
Service Propriété Intellectuelle
1, rue Henri Becquerel
92142 Clamart Cédex (FR)

# (54) Enhanced oil recovery method

(57) This application describes a new methodology to improve the Enhanced Oil Recovery process. The basic idea is to homogenize the behavior of a reservoir when being flushed by an injection process. As it is very difficult to fully characterize the geological texture and petro-physical parameters of a reservoir far away from the wells, the approach relies on the use of "smart" fluids to average the flow conditions so that a piston like displacement flow is achieved everywhere in the reservoir. Usually, fractures and in less extent fissures are the main source of preferential paths in the formation (by-pass), they therefore need to be treated in priority, starting from the largest ones. The idea is to use a shear-gelling fluid to reduce the effective aperture of large fractures, shear stresses and therefore shear-rates being maximal at the fracture boundary, the fluid will gel at the walls hence reducing the effective aperture of the largest fractures.

EP 1 591 619 A1

## Description

### *Technical Field of the Invention*

This invention relates generally to hydrocarbons productions and more specifically to a new methodology to improve enhanced Oil Recovery process whereby the behavior of a flushed reservoir is homogenized.

### *Background of the Invention*

Hydrocarbon fluids such as oil and natural gas are obtained from a subterranean geologic formation, i.e., a reservoir, by drilling a well that penetrates the hydrocarbon-bearing formation. Once a wellbore has been drilled, the well must be completed; a completion involves the design, selection, and installation of equipment and materials in or around the wellbore for conveying, pumping, or controlling the production or injection of fluids. After the well has been completed, production of oil and gas can begin.

Where the formation pressure is not enough for the well to produce naturally and/or the oil displacement is not enough, a common practice is to improve the production through enhanced oil recovery (also called improved oil recovery or tertiary recovery), abbreviated EOR. Though EOR can be required to initiate production, the main objective of EOR process is to minimize the amount of oil left in a reservoir. A common approach is to pump a fluid (generally water) through some injector wells precisely located within the field and produce oil from the producer wells. The goal is to get, within the reservoir a piston-like displacement in order to produce the crude oil (and not the injection fluid), and eventually, produce the total amount of oil contained in the reservoir and replace it by the injection water, hence maintaining the pressure within the reservoir.

In practice, the flow created within the reservoir is never fully piston like. This is due in particular to the fact that reservoirs are always heterogeneous at field scale. These heterogeneities are either related to disruptive events (fractures, cracks), or lithological variations leading to permeability heterogeneity (horizontal variations due to lenses, clay content, pebbles) and anisotropy (ratio vertical permeability over horizontal permeability, often related to the depositional process itself, or diagenesis). Moreover, water is less viscous than oil (except for very light oils). Even in a fully homogeneous medium this would create some flow instabilities leading to "viscous fingering". Another factor leading to a non-piston like flow is the lack of impermeable boundaries between the different fluids that constitute the reservoir. The interface between water and oil is not a sharp interface but generally a fuzzy area where concentration of water in oil and oil in water is varying progressively towards a dominant situation.

Numerous attempts have been made to prevent viscous fingering - and its main A known method of secondary hydrocarbon recovery consists in injecting a flushing fluid - such as water to which polymers have been added in order to increase its viscosity at a value slightly higher than the oil at reservoir conditions (Pressure and Temperature) - in order to flush the hydrocarbons towards the production well. To minimize treatment cost, the polymers of choice are typically high-molecular mass polymers such as polyacrylamides and partially hydrolysed polyacrylamides. This would work perfectly if there were no reservoir heterogeneities, as explained above. These polymers have a shear thinning behavior and follow a power law rheological model. The viscosity decreases when the shear rate increases. As a result the polymer solution is less viscous in the high permeability paths where the velocity is higher, which creates instabilities in the water progression front and makes the process less efficient that it could be and degrades the performance of the recovery process. The effective viscosity is higher in the low velocity zones and lower in the high viscosity zones which is just the opposite of the what needs to be achieved. Moreover, the viscous water reduces the production rate of the wells, as it increases the overall pressure drop for a given throughput.

In an effort to obviate the disadvantages of conventional fluids, it has been to use fluids that either viscosify or gel under shear. With the viscosity increasing reversibly with shear rate, the problem of viscous fingering is greatly minimized and the displacement front is homogenized, thus preventing the formation of pockets of hydrocarbons that have not been flushed and left behind.

International patent application 99/38931 describes fluid shear-gelling compositions comprising precipitated silica nanoparticles and a hydrosoluble copolymer comprising one or more monomers with little or no affinity for silica, and one or more co-monomers that are adsorbed onto the silica. Though such compositions are highly effective, the use of nanometric particles lead to very large quantities of fluids to be pumped leading to logistic issues for EOR operations.

International patent application 02/102917 proposes to use aqueous solutions with dissolved polymers that include three types of sites randomly distributed along the polymer chains: hydrosoluble non-ionic sites, ionic sites and hydrophobic sites. Below a critical temperature, the hydrophilic character is dominant and the polymers behave like a conventional Newtonian fluid, that is a shear-thinning fluid that can easily be pumped into the well and the formation. Above the critical temperature, the sites become hydrophobic and the fluid forms a gel under shear. Therefore, taking advantage of the geothermal temperature gradient, the fluid is progressively heated while it is pumped downwards,

leading to an easy placement and a shear-gelling behavior downhole.

Though shear-gelling fluids have been proposed as discussed above, none of them has achieved large commercial acceptance, in particular in view of the technical and cost limitations. It is therefore an object of the present invention to provide an improved method of.

## ***Summary of the Invention***

One aspect of the present invention is a method for enhancing oil recovery in a subterranean formation, in particular in non-homogeneous reservoir formations, including the step of injecting a shear-gelling fluid prior the injection of a shear-thickening fluid.

In non-homogeneous reservoir formations where permeability varies from one zone to the next, and in contrast to shear-thinning fluids, rheo-viscosifying fluids minimize the difference in fluid flow rate, reducing by-pass of low permeability zones. When reservoirs exhibit fractures, fluids that viscosify under shear reduce the extent to which porous zones are bypassed by the flooding fluid passing through or via the fracture path (for example in sandstone reservoirs), or to which the narrowest fractures are bypassed to the advantage of the largest fractures (for example, in carbonate reservoirs). Injecting a fluid that gels under shear, in conjunction with suitable pumping conditions, reduces the width of the largest fractures where shear is higher but does not reduce the width of the narrowest fractures where shear is lower. Thus, in fractured reservoirs, the best way to reduce oil by-pass consists firstly, in pumping a fluid that gels under shear, and then in pumping a fluid that viscosifies under shear.

This technique is primarily useful in formations containing crude oil among other fluids such as gas and/or water. The present invention is particularly is particularly advantageous for treating very low primary porosity (tight) reservoir in which fractures lead to very difficult EOR conditions. Oil is mainly stored within fractures and fissures of different apertures. These fractures are organized in two or several families which intersect at a given angle thus creating a preferential path in the direction of the intersection. Flow is known to be maximum in this direction. Depending on the orientation of the subsequent tectonics stresses, some fracture families are closed while the others are wide opened, this creates an important heterogeneity of permeabilities. The oil is preferentially trapped in the closed fractures and quickly flushed out of the open fractures.

The main advantage of the proposed method be is to be selective according to shear rates: this enables to selectively reduce the flow through the larger fractures without impairing the flow through the thinner fractures. The larger fractures are usually the main bypass of hydrocarbons for flooding water.

The second advantage is to be reversible and therefore non damageable to the reservoir. By reducing the injection rate to less than 10 times the injection rate adjusted to achieve the critical shear rate, it is possible to remove completely the gel formed in the fractures

## ***Brief description of the drawings***

The above and further objects, features and advantages of the present invention will be better understood by reference to the appended detailed descriptions, and to the drawings wherein:

Figure 1 shows a decision tree used during the performance of the treatment according to the present invention.

## ***Detailed description and preferred embodiments***

The present invention essentially consists in a new methodological approach for enhanced oil recovery applicable to simple reservoirs which overcomes most of the limitations listed above. Some elements of this approach will be also applicable to solving more complex reservoir problems.

As it is difficult to precisely define, characterize and map heterogeneities within a reservoir the proposed approach is based on a "smart" fluid concept which could adapt to local conditions and homogenize the flow across the reservoir. Fractures and fissures being the major root cause for by-passed oil, they need to be treated first. The ideal proposed fluid would gel when it is sheared above a certain threshold. In an opened fracture, the maximum shear will occur at the fracture wall. The fluid will thus gel at the wall and reduce the effective fracture aperture. When the aperture is reduced to a certain point the velocity decreases, and the formation of new gel stops, therefore the fracture will remain opened, enabling a reduced flow to sweep it gently. The larger the fracture, the higher the shear stress, friction pressure drop being imposed by the injector producer well system the largest fractures will be reduced first.

The concept will be illustrated by looking at the flow of a power fluid in two rectangular slots of the same with and of different thickness $e_1$ and $e_2$. These two slots are a simplified representation of an heterogeneous porous medium. Assuming the flow occurs with the same pressure gradient, it can be shown that:

$$V_i = \frac{e_i^{1+1/n}}{2^{1+1/n}3}\left(\frac{\Delta p}{\Delta l}\right)^{1/n}$$

and therefore:

$$\frac{V_1}{V_2} = \left(\frac{e_1}{e_2}\right)^{1+1/n}$$

This means that for a Newtonian fluid the ratio of the fluid mean velocities in each slot will vary as the square of their thickness ratio. For a power law fluid with n < 1 the ratio of the fluid mean velocities will be higher and for a power law fluid with n >1 it will be smaller. So using shear-thickening fluids (n>1) will somehow reduce the distorsion in fluid velocities. But notice that it is impossible to totally prevent the fluid from flowing faster in the larger slot versus the smaller one.

At the same time the shear-rate at the wall in each slot will be:

$$\dot{\gamma}_i \frac{2n+1}{3n}\frac{6V_i}{e_i} = \frac{2n+1}{3n}\Big(\big(\frac{e_i}{2}\frac{\Delta p}{\Delta l}\Big)^{1/n}$$

So the shear rate at the wall will be higher in the larger slot. Since in each slot it is higher at the wall the highest value of the shear rate will be encountered at the wall of the larger slot.

It is possible to approximate the shear-rates reasonable to initiate the shear-gelling reaction. For the sake of this calculation we will forget about the non-Newtonian correction factor for the shear-rate and use the Newtonian formulae (note that the shear-gelling fluids object of the present invention have a close to Newtonian behavior before they gel. So, the calculus using a Newtonian fluid is justified).

$$\dot{\gamma}_{NW_i} = \frac{6V_i}{e_i}$$

For a critical shear-rate of 100 $s^{-1}$, this gives achievable velocities of:

| Slot thickness (mm) | Velocity (m/s) |
|---|---|
| 1 | 0.0167 |
| 10 | 0.167 |
| 100 | 1.67 |

Before it starts gelling a preferred rheo-viscosifying fluid will follow a power law rheological model with n ≤ 1 to be as discriminant as possible for different fracture sizes.

$$\dot{\gamma}_1/\dot{\gamma}_2 = \left(\frac{e_1}{e_2}\right)^{1/n}$$

The preferred behavior is a fluid with a Newtonian or rheo-fluidifying fluid at low shear rates and it starts gelling suddenly over a given shear rate threshold (critical shear rate). This threshold must be adaptable. The fluid must not contain particles larger than one fifth of the smallest fissures known in the reservoir, therefore as a bulk part figure, if the fluid is to contain particles they should not exceed 100 nanometres in size.

Two parameters are important to control the process: the shear rate threshold at which the fluid starts gelling and the friction pressure drop imposed between the injector and the producer wells.

Since none of the geometrical parameters characterizing the reservoir is precisely known, the optimization of the above parameters has to be done by a trial and error approach, while monitoring and optimizing the oil/water ratio in the producer wells. The differential pressure between the injector well and the producers will be increased progressively while decreasing progressively on the other hand the critical gel threshold of the fluid. It is therefore

highly suitable to be able to manage easily the shear rate threshold at which the gelling of the fluid starts, and as a direct consequence of the trial and error optimization approach, the gelling process must be reversible.

The main process issue with such fluids is their placement into the reservoir. Before reaching the reservoir such fluids will have to go through at least two high shear rate domains without gelling. They need to be pumped into the reservoir through the completion and then across the reservoir matrix. Flow in the vicinity of the injector well in usually radial with higher velocities and therefore higher shear rates. The rheo-viscosifying behavior must be triggered on demand. Several techniques can be envisaged; temperature, variation of pH or salinity. One or a combination of these parameters can be used to trigger the shear-gelling process once the fluid is in place within the reservoir, far enough from the injector (no radial flow zone).

The proposed reservoir treatment is to be done in two phases:

- Injection of a pill or shear-gelling fluid in order to reduce the effective aperture of large fractures
- Injection of displacement fluids which may be shear thickening compatible with the previous one to further control the displacement front. They may also convey different components as surfactants included on surface or generated in-situ in order to ease the mobilization of oil.

As it is difficult to insure a smooth operational process in the field, constant flow rates, possible shut downs etc., the gelling fluid is preferably such that the gel does not disappear as soon as the shear rate decreases. This result in the gel exhibiting a rheological hysteresis i.e. such that the gel is stable for a period of time after being formed even if the shear rate is reduced below the critical shear rate. The time it takes for the fluid to reverse to a liquid behavior must be sufficient to account for fluctuations in the pumping rate and even pump break-downs. This property of reversibility is used in the method to remove when necessary the gelled treatment fluid, by reducing the pumping rate below the critical threshold during a sufficient time.

Ideally the fluid will present two thresholds, a shear gelling threshold and a gel liquefaction threshold slightly lower than the previous one. This would insure an easier implementation process. The pill will be replaced each time the flushing process has been interrupted for a long while (time longer than the expected gel life time) or when it has been eroded by the displacement process.

In fractured reservoirs, once the shear gelling pill has been placed, any kind of fluid can be used to flush the oil provided it is compatible with the gel. However, the type of fluid described below is preferred as it minimizes the flow differential between different fractures and different permeability zones in the reservoirs.

In some cases, it will be advisable to inject before the shear thickening fluid, a fluid containing surfactants or components (including possibly bacteriae) that would generate surfactants in situ, in order to ease the recovery of trapped oil. This technique is particularly adapted to heavy oil recovery.

The preferred fluid is a rheo-thickening fluid (i.e. a fluid whose viscosity increases progressively with the shear rate. This process is reversible. The viscosity decreases when the shear rate decreases. Among these fluids some are following a power law rheological model such as

$$\tau = K\,(\dot{\gamma})^{n}$$

In this equation $\tau$ is the constraint, $(\dot{\gamma})$ is the shear rate. K is a constant which characterizes the viscosity of the fluids and n another constant which reflects the type of fluid; $n=1$ the fluid is Newtonian, $n<1$ the fluid has a shear thinning behavior, $n>1$ the fluid has a shear thickening behavior. The fluid needs to invade the pores of the matrix therefore the largest particle it contains will be smaller than one fifth of the smallest pore of the matrix. The flushing fluid will be pumped in continuous mode into the reservoir through the injector well (as opposed to the gelling pill that is placed once). This fluid will contribute to minimize the remaining discrepancies between treated fractures, or between zones presenting different permeabilities and reduce viscous fingering.

Note also that though it is mentioned above that the gelling pill is placed once, pill injections can actually be repeated over the entire life of the exploitation of the reservoir, with the pill placements interlaid with different flushing fluids. This The preferred method allows for the optimization of the treatment cost by minimizing the frequency of pill injections. The method includes renewal of treatment fluid pills to compensate for gel erosion by flushing fluids or long pump shutdowns. This sequence method is also preferred as it allows to use in between the treatment pills, fluid having specific properties adjusted to achieve specific results (i.e. reduce viscosity to increase pumping rates, shear viscosifying properties to increase recovery in the matrix, or use of surfactants, added or generated in-situ to modify wettability.

As a preferred embodiment this fluid, as the shear-gelling fluid, has a triggerable rheological behavior: at injection conditions the exponent n is close to 1 or below 1, but becomes $\geq 2$ on command when it is in the reservoir, far enough from the injector well-bore. The trigger means are the same as listed previously for the shear-gelling fluid.

This preferred embodiment reduces the overall friction between injector and producer wells and enables to produce the crude oil at a higher rate, as the maximum allowable pressure drop between injector and producer wells is often limited to reduce the opening of unwanted fractures. It reduces also the pressure drop around the well-bore, enabling to have more pressure drop further in the reservoir, which provides a better stability of the gelled shear-gelling fluid where it has to be effective.

The proposed approach is leveraging specific properties of two types of fluids referred as rheo-gelling fluids and rheo-viscosifying fluids. The purpose of this section is to give some practical examples of fluids (described in literature elsewhere) which exhibit the required properties. The proposed invention is by no mean limited to these examples of fluids.

Rheo-viscosifying compositions can be formed by associating colloidal particles (nano silica) with polymers. The viscosity is controlled by a system composed of precipitated silica nanoparticles (A), associated with water-soluble copolymer (B) comprising one or more monomers having little or no affinity for the silica and one or more comonomers which adsorb onto silica. These types of compositions are described in International Patent Application 99/38931 hereinafter incorporated by reference.

Preferred copolymers are of type PAA/PVI (polyacrylamide/polyvinylimidazole) or PAA/PVP (polyacrylamide/polyvinylpyrrolidone). Colloidal particles are commercially available. Exemples given in this patent are based on a precipitated silica suspension sold by HOECHST under the trade name KLEBOSOL 30R25

The product has the following characteristics:

| | KLEBOSOL 30R25 |
|---|---|
| Particle size (range in nm) | 11.5 |
| Concentration in suspension (g/l) | 255.5 |
| pH | 8.32 |
| Conductivity (mS/cm) | 0.66 |
| Specific surface area (m2/g) | 120 |

The concentration of copolymer in the water-based fluid is generally in the order of 0.5g/l to 10g/l and normally does not exceed 5%. The precipitated silica is added in a quantity such that the number of grams of copolymer per square metre of silica surface is in the range 0.1 mg/m2 to 2mg/m2m preferably in the range 0.2mg/m2 to 1.5 mg/m2.

For a given quantity Q of polymer added per unit surface area of silica, the quantity of polymer, and thus silica, determines the degree of increase of viscosity (which can result in gelling) for a given shear rate at a given time, and also the minimum shear rate - also known as the critical shear rate - needed to obtain this effect.

A PAA95/PVP5 copolymer was added to an aqueous solution comprising 42,5g/l of silica type de 30R25. The pH was 8,2. The ratio Q was varied with the following properties:

| Q(mg/m2) | 0.5 | 0.6 | 0.8 | 1 | 1.2 |
|---|---|---|---|---|---|
| viscosity at rest (mPa.s) | 3.2 | 6.3 | 7.3 | 42 | 140 |
| viscosity after shear (mPa.s) | 12 | 36 | 80 | 230 | 430 |
| minimum critical shear rate (s-1) | 2800 | 1250 | 750 | 100 | 25 |

It has been shown that a third additive known as competing agent could be added to the aqueous solution. This additive must adsorb onto the silica surface, either in a manner that is stronger than the adsorbable co-monomer (s), or in a manner that is substantially equal of slightly weaker. In the first case the aim is to reduce the available silica surface for adsorption of the copolymer by blocking a portion of the adsorption sites of the silica and by spreading out the sites. In the second case, the competing agent reduces the intensity if adsorption of the copolymer by reversible competition for the silica adsorption sites. The presence of a competing agent is not absolutely needed but can be used to reduce the ratio Q for which a reversible rheo-viscosification/gelling is sought. It enables also to adjust the critical shear rate in the field at the desired value.

As an example of such aqueous solution a system was prepared comprising 16g/l of 30R9 silica and 3.8825 g/l PAA90/PVI type copolymer ([Q=0.8mg/m2 of silica surface] with 50:50 ethylene glycol/propylene glycol (molecular mass 4800g/mol (B11/700, HOECHST). pH was 9.07. Results are presented in the table below:

| % mass of PEO-PPO | 0.01 | 0.025 | 0.05 | 0.2 |
|---|---|---|---|---|
| viscosity at rest (mPa.s) | 800 | 74 | 11 | 16 |

(continued)

| % mass of PEO-PPO | 0.01 | 0.025 | 0.05 | 0.2 |
|---|---|---|---|---|
| viscosity after shear (mPa.s) | 3170 | 606 | 205 | 26 |
| minimum critical shear rate (s-1 | 8 | 88 | 164 | 415 |

This example is showing that the viscosifying property is passing through a maximum when adding a competing agent.

Another type of shear-gelling fluid whose shear-gelling properties can be triggered by different parameters including temperature and pH is given hereafter and further details on these types of compositions can be found in International Patent Application 02/102917 hereinafter incorporated by reference.

Preferred fluids can be produced using aqueous solutions of polymers that include three types of functional groups:

1) Non-ionic functional group that are hydrosoluble at the temperature under consideration

2) Ionic functional group

3) Functional group that are hydrophobic or low critical solution temperature (LCST) functional groups, the functional groups displaying the hydrophobic behavior at least at a temperature of interest which means that the site can be hydrophilic at a different temperature, but the site is insoluble in water at the temperature at which the shear-thickening or gelation or setting into a gel is to occur.

In a preferred embodiment of the present invention, the functional groups are derived from the following monomers:

- non-ionic hydrosoluble monomers: acrylamide and N substituted hydrosoluble derivatives thereof; hydrosoluble N-vinylamides; N-isopropylacrylamide (NiPAM), having an alkyl substituted amide:

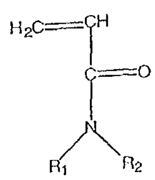

where $R_1$ = H to $C_nH_{2n+1}$ and $R_2$ = H to $CH_3$;

- ionic monomers: acrylic acid, methacrylic acid, maleic anhydride, AMPS (acrylamidomethyl-propylsulfonate), styrenesulfonic acid or vinylsulfonic acid; cationic monomers including substituted and non-substituted vinylpyridine with a pH of less than 2, substituted and non-substituted N-vinylimidazole with a pH of less than 7 and monomers of the following two general formulae:

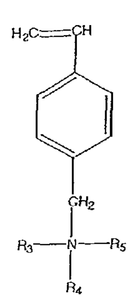

or

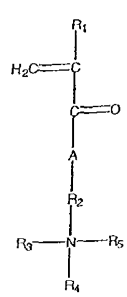

where $R_1$ = H or $CH_3$, A = O or NH, $R_2$ = $(CH_2)_n$ where n = 1 to 3, $R_3$ and $R_5$ = H or $CH_3$, $R_4$ = H to $C_mH_{2m+1}$, a

perfluorinated alkyl chain or any entity between a perfluorinated alkyl chain and an alkyl chain; a mixture of monomers with different substituents; wherein the maximum value of m is a function of the temperature under consideration;

- hydrophobic monomers:

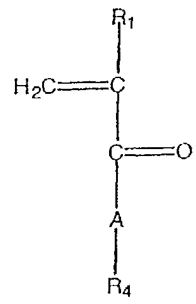

where $R_1$ = H or $CH_3$, A = O or NH, $R_4$ = $C_nH_{2n+1}$ where the minimum value of n is 8 and the value of n is a function of the temperature under consideration, a perfluorinated alkyl chain or any entity between a perfluorinated alkyl chain and an alkyl chain, a hydrophobic silane, a silicone, or a mixture of monomers containing different substituents.

An important feature of the functional groups being used is therefore referred as the Lower Critical Solution Temperature (LSCT). At temperature below the temperature the functional groups are hydrophilic. In that case the polymer chains do not associate together and the solution behaves like a Newtonian fluid or better like a shear thinning fluid. This will allow as explained above an easy placement in the reservoir. Slightly above the LCST, the functional group becomes hydrophobic and the behavior of thickening or forming a gel under shear appears. This temperature threshold property is used in the method to avoid premature gelling in the pumps, tubing, wellbore, or the formation before the fluid reaches the selected zone of interest. Use is made of the geothermal gradient so that the fluid is pumped at a temperature lower than the temperature of the reservoir and its temperature increased gradually within the formation until the critical temperature is reached.

An example of such polymers are denoted by their compositions: DMA = N,N-dimethylacrylamide as non ionic hydrosoluble monomer, AA = acrylic acid as ionic monomer, xCy monomer carrying the alkyl hydrophobic (y being the number of carbons in the alkyl chain). The number preceding the name of the monomer represents the proportion of said monomer as a mole percentage in the final copolymer.

As an example of such fluid and the temperature effect a solution at a concentration 3g/l of 80DMA/20AA polymer grafted with P(EOPO) (Molecular Weight 2,000g/mole , the proportion of Propylene Oxyde (PO) to Ethlylene Oxyde (EO) is 39/6) was prepared and sheared. Such fluid is of shear-thinning type at low temperature and shear thickening type above 30 degrees C.

| Temperature | Initial viscosity (Pa.s) | Critical Shear Rate (s-1) | Max viscosity/initial viscosity |
|---|---|---|---|
| 25 | 0.094 | | |
| 25 | 0.084 | 8 | 3.7 |
| 40 | 0.038 | 21 | 29 |
| 50 | 0.023 | 100 | 13 |

As an example of the Ph effect a PAA95/PVP15 copolymer (Q=0.5mg/m2) was added to an aqueous solution comprising 42.5 g/l of KLEBOSOL 30R25 silica. At the preparation pH (8.7), the system appeared to gel at the start or at least to gel at the slightest shear rate. The pH was varied up to 10.8 with the following results:

| pH | 9.3 | 9.6 | 10.8 |
|---|---|---|---|
| Viscosity at rest (mPa.s) | 250 | 90 | 3 |
| Viscosity after shear (mPa.s) | 2000 | 700 | 120 |
| Minimum critical shear rate | 6 | 15 | 130 |

On increasing the pH, the initial viscosity and the gelling effect decreased substantially and the critical shear rate moved to higher values. pH can therefore be used to controlled the gelling properties of such fluids.

Depending on the type of fluid used several techniques can be used to adjust the pH within the reservoir. The pH can be either increased to the range 7 to 9 starting from acidic conditions, or reduced to the same range starting from basic conditions. The pH adjustment of the fluid may be obtained through the co-injection of a product that reacts gradually versus time to increase the pH of the fluid until it reaches the critical threshold. The kinetics of the reaction is adjusted by the composition of the initial fluid in order that the threshold pH is reached only in the zone of interest.

In the previous listed examples, the increase of pH would be preferred for the particle polymer associations, and the pH reduction more adapted to the proposed single polymers. The pH being triggered by the downhole circulating temperature, the decomposition of chemicals can be used to adjust the pH within the appropriate range to get shear gelling properties only in the zone of interest, to avoid premature gelling.

Among various possibilities the pH increase can be achieved, as an example, using the thermal decomposition of urea (e.g. $CO(NH_2)_2$, $CO(NHCH_3)_2$), or cyanate derivatives (e.g. NaOCN). In these cases the pH increases due to production of $NH_3$ or amines.

The kinetics of decomposition is a function of temperature, therefore above components are chosen to adjust the transition time such that the expected pH is achieved at the right time and at the right place within the reservoir.

Starting from basic conditions, the pH decrease could be achieved, as examples through decomposition of: esters (e.g. RO-COR') which lead to formation of acids (e.g. R'COOH) hallogene derivatives (e.g RX) thermal decomposition which lead to strong acid production (e.g. XH), X being Cl, Br, or I. The radical R can be R"CO. Then the decomposition of R"COX will generate a strong mineral acid (XH) and an organic acid (R"COOH).

In the same way the kinetics of decomposition being a function of temperature, above components are chosen to adjust the transition time such that the expected pH is achieved at the right time and at the right place within the reservoir.

***<u>Example of treatment scenario as per method described</u>***

The following scenario includes measuring some parameters such as injection pressures, production pressures, phase flow rates and adjusting the critical shear rates to optimized the desired output parameters. The effectiveness of the treatment is evaluated and the critical shear rate thresholds are adjusted to optimize the desired output parameters such as maximized hydrocarbon production or minimized water/oil ratio according to desired policy. At constant flow rate, an increase of the critical shear rate is leading to an increased production (water plus oil), a reduced selectivity between oil and water. Conversely a reduction of critical shear rate is leading to a reduction of production (water plus oil) but an increase of selectivity between hydrocarbon and water. Based on production and selectivity measured at the producer, the critical shear rate will thus be adjusted at each injector. A preferred monitoring and control technique will consist in placing permanent monitoring means in each injection well treated to acquire the injection profile with the objective to make it as flat as possible.

Note that the displacement step can be carried out with non-viscosified water though best results are obtained if the treatment is carried out with a shear-viscosifying fluids, typically of a similar type as the one used for the pill since this would avoid compatibilities issues.

**Step 1:** Record production flow rates (water and hydrocarbons) and the water to hydrocarbons ratio of the production wells. Record the injection flow rate of the injector wells. Vary the pressure drop between the injector and the producing wells to establish a relationship between the different parameters

**Step 2:** Treatment is done through the injector wells. Monitoring can be implemented in both the injector and the producing wells.

**Step 3:** Estimate the distribution and size of fractures based on either geological information or production history. Use this information to compute the shear stress at the wall of the largest fractures that needs to be treated. If the fracture aperture distribution is not precisely known, the shear stress has to be estimated on the average expected fracture aperture.

**Step 4:** Select the treatment fluid such as its critical shear rate is lower than the shear stress computed in step 3, then adjust its pH to a value such that the fluid does not present a rheo-thickening behavior, add a chemical component that will under the reservoir estimated temperature either increase the pH, if the pH is lower than the one needed for the fluid to present a rheo-thickening behavior, or decrease the pH if the chosen pH is higher than the one needed for the fluid to present a rheo-thickening behavior.

**Step 5:** prepare a water-based spacer with a pH very close to the one of the treatment fluid. If required in certain cases, polymers could be added to the spacer fluid in order to increase its viscosity and improve the displacement of the formation fluids within the reservoir

**Step 6:** pump successively the spacer fluid immediately followed by the treatment fluid. The treatment fluid will be pushed by some other treatment fluids or displacement fluids as in a normal EOR operation. The flow rate must

be adjusted to the value used to compute the shear stress at the fracture wall in step 3.

**Step 7:** perform the same measurements as in Step 1 and proceed with the analysis described figure 1.

**Step 8a:** This step applies to case 1.1 of figure 1. The treatment fluid needs to be removed. The injection process is stopped until the gel breaks. The treatment fluid is then displaced by the displacement fluid at a rate which is roughly half the normal flushing rate. Follow by step 9a.

**Step 8b:** This step applies to case 2.1 of figure 1. The treatment fluid does not need to be removed; the new treatment fluid can be placed on top of this one. Follow by step 9a.

**Step 9a:** The process needs to be started again at step 4, with treatment fluid whose critical shear rate is slightly higher than previously.

**Step 9b:** The process needs to be started again at step 4, and inject a treatment fluid whose critical shear rate is lower than the one of the previous fluid.

## Claims

1. A method for enhancing oil recovery including displacing the formation fluids by means of an injected fluid comprising the step of pumping a pill to reduce the apertures of the largest formation fluids pathways prior to injecting the displacement fluid, said reduction of the fracture apertures resulting in an equalization of the fluid velocities across the displacement front in the formation.

2. The method of claim 1, wherein said pill consists of a shear-gelling fluid that gels when subject to a shear above a certain critical shear rate.

3. The method of claim 2, wherein the gelling of the pill is sudden.

4. The method of claim 3, wherein the shear-gelling fluid properties are adjusted prior to the injection depending on the expected distribution of velocities within the reservoir.

5. The method according to any claims 2 to 4, wherein a formed gel remains stable for a period of time after the shear gel is reduced below the critical shear-rate.

6. The method according to claims 2 to 5, wherein the shear-dependent gel behavior is only expressed above a critical temperature.

7. The method according to claims 2 to 6, wherein the shear-dependent gel behavior is only expressed under specific pH conditions.

8. The method according to any of the preceding claims, wherein a flush fluid is injected before the pill.

9. The method of claim 8, wherein the flush fluid is used to control the pH of the shear-gelling fluid.

10. The method according to any of claims 2 to 9, wherein the shear-gelling fluid comprises one or more polymers dissolved in an aqueous phase wherein the polymers include hydrosoluble non-ionic functional groups, ionic functional groups, and hydrophobic or low critical solution temperature (LCST) functional groups, the functional groups displaying these properties at least at a temperature of interest so as to cause gelling.

11. The method according to any of claims 2 to 9, wherein the shear-gelling fluid is based on a system composed of precipitated silica nanoparticles, associated with a water-soluble copolymer comprising one or more monomers having little or no affinity for the silica and one or more co-monomers which adsorb onto silica

12. The method according to any of the preceding claims, wherein the displacement fluid is a shear-thickening fluid.

13. The method of claim 12, wherein the shear-thickening fluid is based on a system composed of precipitated silica nanoparticles, associated with a water-soluble copolymer comprising one or more monomers having little or no affinity for the silica and one or more co-monomers which adsorb onto silica.

14. The method of claim 12, wherein the shear-thickening fluid omprises one or more polymers dissolved in an aqueous phase wherein the polymers include hydrosoluble non-ionic functional groups, ionic functional groups, and hydrophobic or low critical solution temperature (LCST) functional groups, the functional groups displaying these properties at least at a temperature of interest so as to cause viscosifying.

**15.** The method according to any of the preceding claims, wherein the step of pumping a pill is repeated along the period of exploitation of the reservoir.

**16.** The method according to any of the preceding claims, comprising measuring at least one of the parameters selected from the list consisting of injection pressures, production pressures, phase flow rates and adjusting the critical shear rates to optimized the desired output parameters.

FIGURE 1

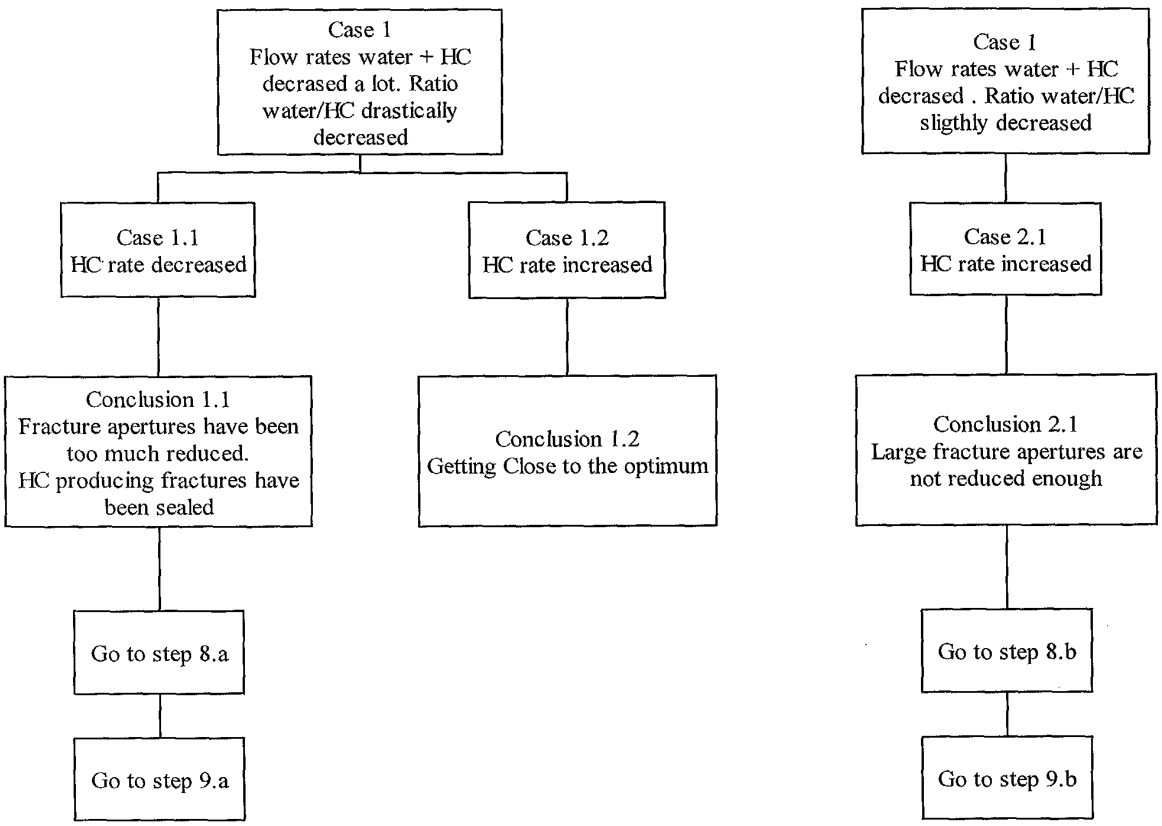
Case 1
Flow rates water + HC decrased a lot. Ratio water/HC drastically decreased
Case 1.1
HC rate decreased
Case 1.2
HC rate increased
Conclusion 1.1
Fracture apertures have been too much reduced.
HC producing fractures have been sealed
Conclusion 1.2
Getting Close to the optimum
Go to step 8.a
Go to step 9.a
Case 1
Flow rates water + HC decrased . Ratio water/HC sligthly decreased
Case 2.1
HC rate increased
Conclusion 2.1
Large fracture apertures are not reduced enough
Go to step 8.b
Go to step 9.b

European Patent Office

# EUROPEAN SEARCH REPORT

Application Number
EP 04 29 1110

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br><br>Y | US 5 100 567 A (NAAE DOUGLAS G ET AL) 31 March 1992 (1992-03-31)<br>* column 1, lines 22-25 *<br>* column 3, lines 29-66 *<br>----- | 1<br><br><br>2-16 | E21B43/25<br>C09K8/58 |
| Y,D | WO 02/102917 A (SOFITECH NV ; SCHLUMBERGER CA LTD (CA); HOURDET DOMINIQUE (FR); CADIX) 27 December 2002 (2002-12-27)<br>* the whole document *<br>----- | 2-16 | |
| A | US 3 315 743 A (ABDO MILTON K ET AL) 25 April 1967 (1967-04-25)<br>* column 1, lines 48-54 *<br>* column 3, line 75 - column 4, line 3 *<br>* column 5, lines 71-73 *<br>----- | 1 | |
| A | US 3 410 343 A (ABDO MILTON K) 12 November 1968 (1968-11-12)<br>* the whole document *<br>----- | | |
| A,D | WO 99/38931 A (SOFITECH NV ; SCHLUMBERGER CA LTD (CA); SCHLUMBERGER CIE DOWELL (FR);) 5 August 1999 (1999-08-05)<br>* the whole document *<br>----- | | TECHNICAL FIELDS SEARCHED (Int.Cl.7)<br>C09K<br>E21B |

The present search report has been drawn up for all claims

| Place of search | Date of completion of the search | Examiner |
|---|---|---|
| Munich | 3 November 2004 | Bellingacci, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................
& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 04 29 1110

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-2004

| Patent document cited in search report | Publication date | Patent family member(s) | Publication date |
|---|---|---|---|
| US 5100567 A | 31-03-1992 | NONE | |
| WO 02102917 A | 27-12-2002 | FR 2826015 A1 | 20-12-2002 |
| | | WO 02102917 A2 | 27-12-2002 |
| | | EP 1404776 A2 | 07-04-2004 |
| US 3315743 A | 25-04-1967 | NONE | |
| US 3410343 A | 12-11-1968 | NONE | |
| WO 9938931 A | 05-08-1999 | FR 2774385 A1 | 06-08-1999 |
| | | AU 3250199 A | 16-08-1999 |
| | | CA 2319045 A1 | 05-08-1999 |
| | | DE 69906255 D1 | 30-04-2003 |
| | | DE 69906255 T2 | 04-12-2003 |
| | | EA 2805 B1 | 31-10-2002 |
| | | WO 9938931 A1 | 05-08-1999 |
| | | EP 1051452 A1 | 15-11-2000 |
| | | JP 2002501968 T | 22-01-2002 |
| | | NO 20003905 A | 02-10-2000 |
| | | US 6586371 B1 | 01-07-2003 |

EPO FORM P0459

For more details about this annex : see Official Journal of the European Patent Office, No. 12/82